# FASCICULE DE BREVET EUROPEEN

(11) **EP 2 255 330 B1**
(45) Date de publication et mention de la délivrance du brevet: **17.10.2018**
(21) Numéro de dépôt: 09710232.1
(22) Date de dépôt: 12.02.2009
(51) Int. Cl.: G06Q 30/00, G06T 7/20, G06Q 50/00, G06K 9/80, G06K 9/48

(54) **PROCÉDÉ DE SUIVI D'INDIVIDUS DANS UN CHAMP DE VISION D'UNE CAMÉRA**
VERFAHREN ZUM VERFOLGEN VON INDIVIDUEN IN EINEM SICHTFELD EINER KAMERA
METHOD OF TRACKING INDIVIDUALS IN A FIELD OF VISION OF A CAMERA

(30) Priorité: 12.02.2008 FR 0850873
(43) Date de publication de la demande: 01.12.2010
(73) Titulaire: Cliris, 92200 Neuilly Sur Seine (FR); Zeller, Alexandre, 92200 Neuilly Sur Seine (FR)
(72) Inventeur: ZELLER, Alexandre, F-92200 Neuilly Sur Seine (FR); REVUE, Alexandre, F-75005 Paris (FR)
(74) Mandataire: IPAZ
(86) Numéro de dépôt international: PCT/FR2009/050226
(87) Numéro de publication internationale: WO 2009/101366

(56) Documents cités:
- WO-A-2006/097680
- WO-A2-2008/008505
- US-A1- 2006 028 552
- US-A1- 2007 003 141
- US-A1- 2007 003 141
- TAO ZHAO ET AL: "Segmentation and Tracking of Multiple Humans in Crowded Environments" IEEE TRANSACTIONS ON PATTERN ANALYSIS AND MACHINE INTELLIGENCE, IEEE SERVICE CENTER, LOS ALAMITOS, CA, US, vol. 30, no. 7, 1 juillet 2008 (2008-07-01), pages 1198-1211, XP011224157 ISSN: 0162-8828
- HANSEN D M ET AL: "Automatic Annotation of Humans in Surveillance Video" COMPUTER AND ROBOT VISION, 2007. CRV '07. FOURTH CANADIAN CONFERE NCE ON, IEEE, PI, 1 mai 2007 (2007-05-01), pages 473-480, XP031175839 ISBN: 978-0-7695-2786-4
- TAO ZHAO ET AL: "Bayesian human segmentation in crowded situations" PROCEEDINGS / 2003 IEEE COMPUTER SOCIETY CONFERENCE ON COMPUTER VISION AND PATTERN RECOGNITION, 18 - 20 JUNE 2003, MADISON, WISCONSIN; [PROCEEDINGS OF THE IEEE COMPUTER CONFERENCE ON COMPUTER VISION AND PATTERN RECOGNITION], LOS ALAMITOS, CALIF. [U.A, vol. 2, 18 juin 2003 (2003-06-18), pages 459-466, XP010644706 ISBN: 978-0-7695-1900-5

## Description

La présente invention se rapporte à un procédé de suivi d'individus en déplacement dans une zone d'observation. Elle trouve une application particulièrement intéressante mais non limitative dans le domaine de l'analyse comportementale par vision artificielle. Plus précisément, la présente invention peut s'appliquer à des systèmes dans lesquels on dispose d'au moins une caméra disposée en hauteur dans un endroit stratégique d'un magasin où l'on est capable de visualiser des déplacements de personnes vers et en provenance des rayons du magasin. Le flux vidéo de la caméra est traité de façon notamment à réaliser des analyses comportementales.

Dans le domaine d'analyse comportementale, il peut être intéressant de connaître les déplacements des personnes au niveau d'un croisement ou dans une zone donnée.

On connaît le document WO 2006/097680 décrivant un système de surveillance vidéo dans lequel on identifie des blobs sur les images acquises, et on apparie chaque blob avec un objet identifié précédemment de façon à suivre le mouvement des objets.

On connaît en outre le document Thao Zhao et al, « Segmentation and Tracking of Multiple Humans in Crowded Environments », IEEE Transactions on Pattern Analysis and machine intelligence, p. 1198-1211, décrivant une modélisation complexe du problème cherchant à résoudre simultanément la problématique d'apprentissage de fond, de détection/dénombrement de personnes, et d'appariement/suivi, cela par une estimation continue d'une fonction de vraisemblance globale. La génération de nouvelles cibles dans l'approche de ce document se fait à partir de trois critères : deux de détection de têtes, un de résidu de zone en mouvement.

Un but de la présente invention est d'établir des flux entre différents points d'accès d'un carrefour par exemple. La présente invention a aussi pour but un nouvel outil d'analyse comportementale sur les trajectoires des personnes dans un magasin.

On atteint au moins l'un des buts précités avec un procédé de suivi d'individus en déplacement dans une zone d'observation traversée par des individus, dans lequel procédé on acquiert une pluralité d'images de la zone d'observation au moyen d'une caméra vidéo qui est fixe de préférence. Pour chaque image acquise (en provenance notamment d'une image vidéo) on réalise les étapes suivantes :
- extraction d'un fond fixe de l'image,
- une étape a) de détection de zones de pixels « blobs » se détachant du fond fixe de l'image, cette zone de pixels correspond en fait aux éléments en mouvement, en particulier aux individus,
- une étape b) de détection des individus, dans laquelle :
   b1) pour chaque blob, on génère plusieurs hypothèses de positions possibles au sein d'un modèle tridimensionnel de la zone d'observation en utilisant les caractéristiques de la caméra et une taille standard d'individu ;
   et pour chaque position possible, on détecte une tête d'individu en appliquant un modèle tridimensionnel d'individu sur le blob correspondant,
   b2) dénombrement des individus pour chaque blob, en fait parmi les hypothèses de position possibles, on détermine la position la plus probable vis-à-vis des dimensions du blob concerné,
   c) pour chaque individu détecté, détermination de la position occupée par cet individu, et
   d) pour l'ensemble des positions déterminées, on minimise la distance globale entre les positions ainsi déterminées dans l'image en cours et des positions déterminées lors d'une image précédente.

Avec le procédé selon la présente invention, plus deux détections sont proches, plus elles sont susceptibles de correspondre à un même individu. Ainsi la trajectoire d'un individu est formée par un ensemble de positions déterminées à travers des images successives et appariées ensemble selon le critère de la minimisation globale.

Dans la méthode décrite dans le document WO 2006/097680, les blobs détectés sont directement appariés aux cibles précédemment suivies. Dans le procédé selon la présente invention, les blobs détectés sont utilisés pour générer des hypothèses de position dans l'espace 3D, et ce sont ces hypothèses qui sont mises en correspondances avec des cibles 3D suivies au fil du temps. De par cette différence d'approche, la mise en correspondance dans la méthode selon le document WO 2006/097680 est effectuée en utilisant des critères 2D dans l'image (proximité dans l'image, distributions de couleurs, de contours, ...). La mise en correspondance dans le procédé selon la présente invention utilise en plus de ces critères, la cohérence tridimensionnelle des cibles et des hypothèses générées à la détection.

Selon une caractéristique avantageuse de l'invention, la minimisation de la distance globale consiste à réaliser les étapes suivantes : pour chaque position d'individu déterminée, on évalue la distance par rapport aux autres positions d'individus, définissant ainsi une matrice de distances que l'on convertit en matrice de similitudes, puis on normalise des vecteurs propres de cette matrice de similitudes. En d'autres termes, on réalise en fait une méthode à base de décomposition en valeurs singulières. La normalisation des vecteurs propres de cette matrice de similitudes permet d'identifier le meilleur appariement global de l'ensemble des positions.

En ce qui concerne la segmentation de groupes, l'approche décrite dans le document WO 2006/097680 repose sur l'hypothèse d'un blob unique, que l'on cherche à mettre en correspondance avec les cibles multiples détectées aux étapes précédentes.

L'approche selon la présente invention ne fait pas une telle hypothèse, chaque blob générant plusieurs hypothèses de détections, dont un certain nombre de fausses détections. Ces hypothèses sont ensuite filtrées et optimisées pour expliquer au mieux la taille, la forme et les propriétés du blob. Cela permet entre autres de ne pas être dépendant de la qualité des détections passées, et de pouvoir séparer un groupe de personnes sans avoir à supposer que ces personnes étaient séparément détectables dans les images précédentes.

Par ailleurs, dans le document WO 2006/097680, la gestion de la distance aux multiples objets détectés (depth order) est effectuée après détection. Dans le procédé selon la présente invention, cette distance est estimée dès la génération d'hypothèse, donc avant même la validation d'une cible.

Selon l'invention, la distance entre deux positions est définie en prenant en compte :
- une distance géométrique 3D : chaque position est identifiée dans un repère 3D fixe, il est donc possible d'évaluer la distance en mètres séparant deux positions ;
- une distance géométrique 2D avec prise en compte de recouvrement : chaque position est identifiée dans le plan de l'image, il est donc possible d'évaluer la distance en pixels séparant deux positions dans cette représentation, on peut notamment utiliser la distance dite de Hausdorf, et/ou utiliser des critères de recouvrement de positions ;
- une distance colorimétrique : pour chaque position, il est possible d'établir une signature à partir de ses histogrammes de couleur ; la mesure de corrélation entre les signatures de deux positions permet d'en déduire une distance d'apparence des deux positions ;
- une cohérence temporelle : la date de détection de deux positions peut être intégrée dans la mesure de distance pour apparier de préférence deux positons proches dans le temps.

L'invention est notamment remarquable par le fait qu'on effectue un appariement global sur l'ensemble des individus détectées, en utilisant des notions riches de distance entre individus pouvant être basées sur des notions de position géométrique, dimensions, signature d'apparence, cohérence temporelle, ...

En ce qui concerne la gestion des occlusions / fusions de cibles, dans le document WO 2006/097680, la gestion des occlusions s'effectue sur des critères de signature de couleur et de densité de contours. Au contraire, selon la présente invention, cette gestion s'effectue de manière globale sur l'ensemble des cibles, en considérant leur cohérence collective pour expliquer la distribution de blobs et de contours dans la scène. Les signatures par couleur ne sont pas utilisées.

En complément notamment de ce qui précède, il est proposé un procédé utilisant plusieurs caméras dans différentes zones d'observation. On désire suivre des individus qui passeraient de la zone d'observation d'une caméra à la zone d'observation d'une autre caméra. Pour chaque caméra, on réalise les étapes telles que décrites précédemment. Selon l'invention, on réalise en outre les étapes suivantes :
- on détermine une trajectoire locale pour chaque individu et pour chaque zone d'observation, cette trajectoire locale correspondant aux positions successives occupées par cet individu,
- on enregistre ces trajectoires locales ainsi que les horaires d'apparition et de disparition,
- on effectue un appariement des différentes trajectoires locales à travers différents champs d'observation en déplaçant une fenêtre temporelle glissante sur l'ensemble des enregistrements, en cherchant à apparier la disparition d'une trajectoire locale avec l'apparition d'une autre.

Selon une caractéristique avantageuse de l'invention, l'étape b1) de détection d'une tête d'individu s'effectue par analyse de contours.

Selon une première variante, l'étape de détection de têtes comprend les étapes suivantes :
application d'un filtre de Canny sur l'image par rapport aux zones de pixels de façon à générer une image de contours des zones de pixels,
application d'une transformée en distance de façon à élaborer une carte de distances,
réalisation d'une convolution entre la carte de distance et un modèle de tête (« template ») de façon à obtenir une carte de convolution, et
application d'un algorithme de ligne de partage des eaux (« watershed ») de façon à détecter des têtes d'individus.

L'utilisation d'algorithme de ligne de partage des eaux pour la détection de têtes d'individus permet d'obtenir les positions les plus probables de têtes dans l'image sans avoir recours à des valeurs arbitraires (notamment de valeurs de seuils) ce qui limite les risques de non détection et garantit l'unicité d'une solution locale.

Selon une variante de l'invention, l'étape b1) de détection d'une tête d'individu s'effectue par détermination de cohérences entre des positions de tête et de pied. Pour ce faire :
- on établit une correspondance entre des pixels de l'image et des points de l'espace correspondant,
- on considère que les pixels d'un blob correspondent à un point visible d'un individu et potentiellement à ses pieds ou à sa tête, et
- on réalise une projection de ces pixels sur les plans du sol et des plans placés à hauteur standard de tête, la zone commune de projection des pieds et de la tête étant identifiée comme une position possible.

Avantageusement, le dénombrement consiste à identifier simultanément le nombre d'individus présents et leur position respective. En d'autres termes, on réalise une segmentation de groupes. En effet, dans la plupart des circonstances, les images proviennent d'une caméra ayant parfois un angle de visée oblique par rapport au sol, provoquant ainsi de nombreuses situations d'occlusion entre individus, il est alors difficile d'utiliser une recherche individu par individu. Pour cela, la présente invention propose donc une solution cherchant à détecter et dénombrer un groupe (identification simultanée du nombre de personnes présentes et de leur position respective), et non à détecter chaque individu séparément.

Selon une caractéristique de l'invention, l'identification des individus est effectuée à partir d'un modèle d'apparence à trois ellipses imitant un individu.

Ce modèle d'apparence est optimisé selon les critères suivants :
- minimisation du nombre d'individus,
- maximisation du nombre de pixels différents du fond et appartenant aux silhouettes,
- minimisation du nombre de pixels différents du fond et n'appartenant pas aux ellipses,
- minimisation du nombre de pixels appartenant au fond et aux ellipses, et
- minimisation de la distance des contours d'un modèle 2D/3D.

Ensuite, l'optimisation est réalisée au moyen d'un algorithme itératif de descente de gradient.

Selon une caractéristique avantageuse de l'invention, on répartit la convergence de l'algorithme itératif sur des images successives. La convergence de l'algorithme itératif vers un dénombrement optimal des individus peut prendre un temps considérable. Avec la présente invention, on se contente d'une solution partielle approchée sur une image au moment de passer à l'image suivante; cette solution approchée servant de point de départ pour l'image suivante.

Selon une variante avantageuse de l'invention, l'étape b) de détection des individus peut comprendre les étapes suivantes :
à partir d'un modèle 3D de la zone d'observation, d'un modèle 3D d'individu, et des caractéristiques liées à l'appareil d'acquisition de la pluralité d'images d'observation, on réalise une projection perspective dans l'image en cours de chaque surface élémentaire de la zone d'observation de façon à obtenir une projection 2D des modèles d'individu ;
on calcule la correspondance des modèles 2D sur chaque zone de pixels de façon à obtenir une carte de densité de probabilité de présence ; et
on réalise une recherche de maxima par l'algorithme de ligne de partage des eaux de façon à déterminer les individus détectés.

De préférence, les caractéristiques de la caméra vidéo comprennent le champ de vision, le positionnement et la distorsion.

D'une façon générale, selon l'invention, l'extraction du fond fixe de l'image est obtenue en moyennant les valeurs des pixels de l'image au cours du temps.

Selon l'invention, pour tenir compte des faibles variations des valeurs des pixels, on peut modéliser la valeur de chaque pixel de fond par une distribution de probabilités. Cette distribution peut être représentée par une gaussienne, ou plus sobrement par une valeur moyenne et deux valeurs min et max.

Par ailleurs, afin de minimiser autant que possible l'influence des objets n'appartenant pas au fond, avant de moyenner les valeurs des pixels de l'image, il est possible d'effectuer une détection instantanée de mouvement par soustraction d'images successives et d'appliquer un seuil afin d'obtenir un masque correspondant aux pixels qui ne seront pas moyennés.

D'autres avantages et caractéristiques de l'invention apparaîtront à l'examen de la description détaillée d'un mode de mise en oeuvre nullement limitatif, et des dessins annexés, sur lesquels :
La figure 1 est une vue schématique générale d'un rayon de magasin surveillé par caméra,
La figure 2 est une vue schématique illustrant la distribution de flux dans un croisement,
La figure 3 est une vue schématique illustrant l'origine de flux dans un croisement,
La figure 4 est une vue schématique illustrant le positionnement de plusieurs individus à deux instants différents,
La figure 5 est une vue schématique illustrant l'appariement des positions de la figure 4,
La figure 6 est une vue schématique illustrant plusieurs trajectoires dans le cadre d'un mode de gestion multi-caméras,
La figure 7 est une vue schématique illustrant l'appariement des trajectoires de la figure 6,
La figure 8 est une vue schématique illustrant la répartition de flux depuis une origine unique et vers plusieurs destinations,
La figure 9 est une vue générale d'un organigramme illustrant différentes étapes d'un procédé selon l'invention,
Les figures 10 et 11 sont des images provenant d'une caméra de surveillance sans et avec des blobs apparents,
La figure 12 est une vue d'un organigramme détaillé d'un algorithme de détection de têtes d'individus,
La figure 13 illustre un modèle d'apparence à trois ellipses selon l'invention,
La figure 14 est un schéma simplifié illustrant différentes étapes d'une variante d'algorithme de détection d'individus,
La figure 15 est une vue de l'algorithme décrit sur la figure 14,
La figure 16 est un schéma simplifié illustrant la projection des blobs, et
La figure 17 est un schéma simplifié illustrant une zone de correspondance entre des projections de tête et de pied.

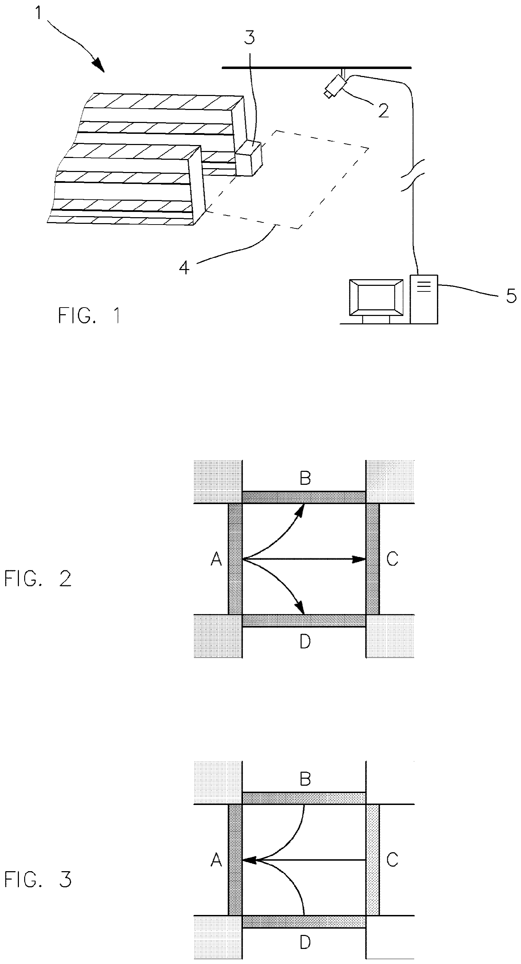

Sur la figure 1 on voit un rayon 1 d'un magasin équipé d'une caméra de surveillance 2 disposée en hauteur. Cette caméra de surveillance est fixée au plafond et est disposée en oblique de façon à filmer un objet d'intérêt 3 dans un endroit stratégique tel qu'un carrefour de plusieurs allées dans le magasin. On définit une zone d'observation 4 qui est une surface autour de l'objet d'intérêt 3 et comprise dans le champ de vision de la caméra 2. La présente invention a pour but de déterminer les trajectoires des individus traversant cette zone d'observation. Sur la figure 1, on voit que la caméra de surveillance 2 est reliée à un serveur distant 5 destiné à mettre en oeuvre le procédé selon l'invention.

Le suivi des individus par la caméra permet d'établir des flux entre différents points d'accès d'un carrefour, et donc d'extraire notamment les informations suivantes :
- distribution des flux à partir d'un point d'entrée comme représenté sur la figure 2, et
- origine des flux vers un point de sortie comme représenté sur la figure 3.

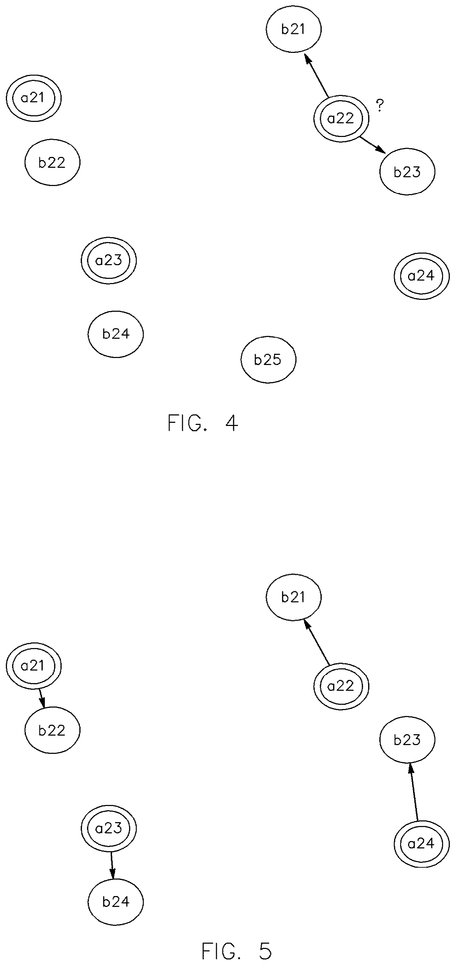

La figure 4 illustre la problématique de l'appariement. On distingue en b21-b25 des positions d'individus pour une image à l'instant t+1, et en a21-a24 des positions d'individus pour une image à l'instant t. On a donc déterminé avec précision la position de chaque individu dans la zone d'observation pour chaque instant. Par exemple pour la position a22, il s'agit de savoir si sa position suivante est la position b21 ou la position b23. Avec le procédé selon l'invention, on réalise une minimisation de la distance globale. En fait on normalise la matrice de correspondance. Sur la figure 5, on voit que l'appariement est optimal par minimisation des distances de façon globale : a22 est apparié à b21, et a24 est apparié à b23.

L'analyse des flux peut être étendue à l'ensemble d'un magasin observé par plusieurs caméras. Cela peut être fait simplement par concaténation de données locales sur les croisements, ou mieux par suivi individuel des individus dans les différents champs de caméras.

Dans un tel mode de gestion de caméras multiples, il arrive souvent que les cibles soient perdues pendant plusieurs secondes. Dans ce mode, les individus sont suivis localement sur chaque caméra, et chaque trajectoire locale est enregistrée dans une base de données dans le serveur 5 par exemple; cet enregistrement contient les positions et dates d'apparition et de disparition des individus, et éventuellement une représentation condensée de leur signature.

L'appariement entre les trajectoires locales est ensuite effectué en déplaçant une fenêtre temporelle glissante sur l'ensemble des enregistrements, en cherchant à apparier la disparition d'une trajectoire locale avec l'apparition d'une autre. Cet appariement global peut s'effectuer en plusieurs passes de façon à obtenir une meilleure optimisation globale, en utilisant toujours la même méthode de normalisation de la matrice de correspondance.

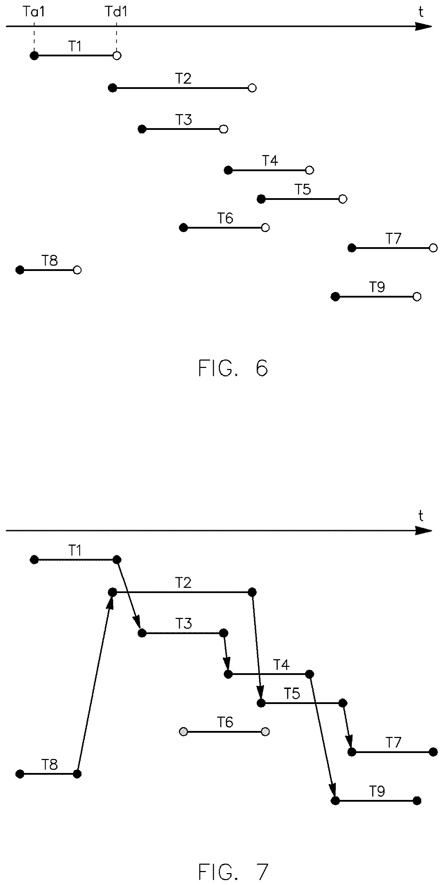

Sur la figure 6 on voit une représentation temporelle de différentes trajectoires de différentes caméras enregistrées dans la base de données temporaire. Chaque trajectoire est repérée par un temps d'apparition et un temps de disparition : Ta1 et Td1 respectivement pour la trajectoire T1.

Sur la figure 7 on reconstruit des trajectoires complètes par appariement des points de disparition et des points d'apparition, en utilisant des critères de cohérence spatiale, temporelle et visuelle notamment.

L'analyse statistique des trajectoires sur l'ensemble du magasin peut aboutir à l'établissement d'une ou plusieurs trajectoires-types (trajectoires les plus empruntées par les clients du magasin).

La recherche de trajectoires types peut s'effectuer de différentes façons suivant le degré de complexité des éléments de trajectoires :
- accumulation simple (cas de faible combinatoire, donc peu de trajectoires possibles) : à chaque trajectoire possible est associé le nombre de personnes ayant effectuées cette trajectoire.
- Modélisation markovienne : l'ensemble des points de passage du magasin sont représentés comme les noeuds d'une chaîne de Markov. Les données de trajectoires observées servent à l'apprentissage de cette chaîne pour établir les probabilités de passage d'un point à un autre. L'analyse de la chaîne de Markov finale permet ensuite d'établir les chemins les plus probables, et fournit également un modèle permettant les prédictions de trajectoires à partir des comportements observés.

Les données des flux peuvent être représentées visuellement de différentes façons, suivant l'information que l'on souhaite en extraire.

On peut les représenter graphiquement sous forme d'un camembert (« Pie chart ») en indiquant le taux de trajectoire vers telle ou telle sortie. On peut aussi les représenter graphiquement sous forme d'un histogramme illustrant l'évolution de la répartition des flux au cours du temps.

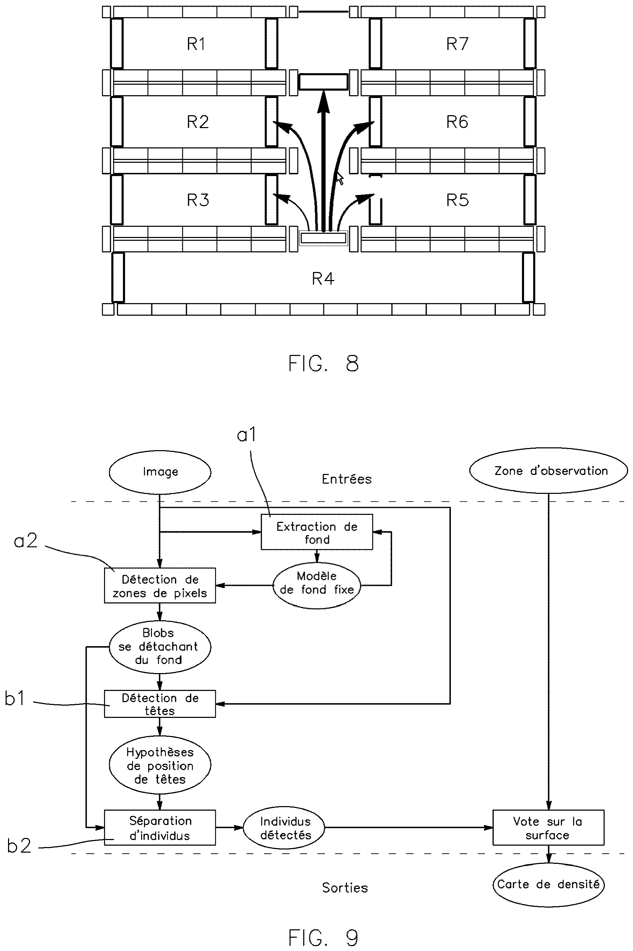

On peut aussi réaliser une répartition des flux rapportée à la disposition des lieux comme on peut le voir sur la figure 8. Les éléments R1 à R7 représentent des rayons d'un magasin tels que par exemple jardinage, librairie, multimédia, papeterie... Les flux sont représentés par des flèches indiquant leur origine, leur destination et leur intensité au moyen de leur largeur.

On va maintenant décrire un peu plus en détail le processus de détection des individus.

Sur la figure 9, on voit un organigramme d'un procédé selon l'invention mis en oeuvre dans le serveur distant 5. Cet organigramme a pour entrées une image acquise par la caméra de surveillance 2 et la zone d'observation 4.

A l'étape a1, on extrait le fond de l'image acquise de façon à obtenir un modèle de fond fixe. L'algorithme d'extraction du fond peut être de type itératif sur notamment plusieurs images ou un flux d'image vidéo. L'approche la plus simple pour extraire le fond consiste à moyenner les valeurs des pixels au cours du temps. La contribution à la moyenne d'un objet en mouvement sera d'autant plus faible que son mouvement est rapide par rapport à la cadence des images.

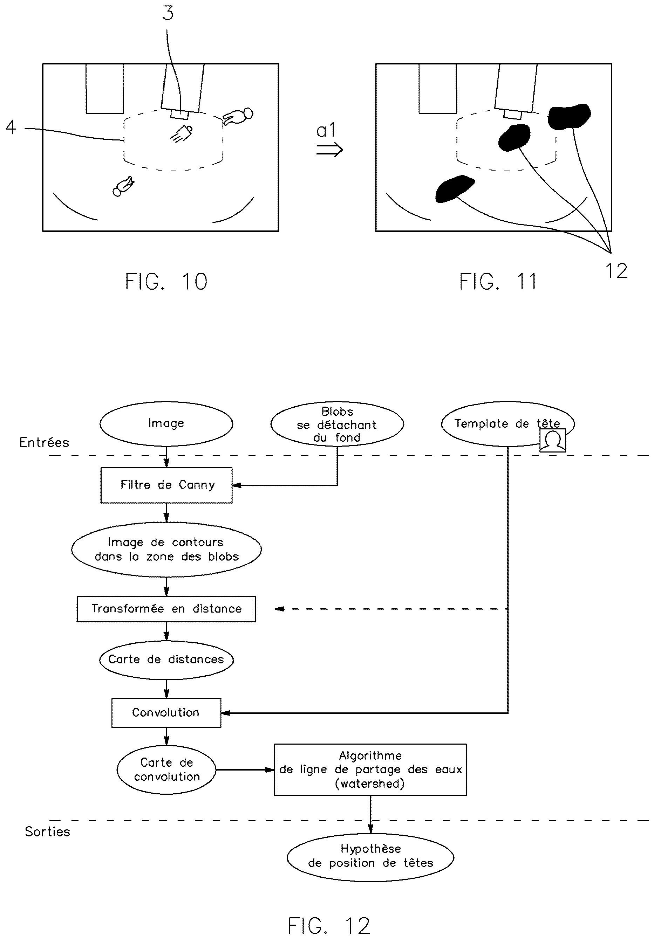

Plus précisément, l'extraction de fond selon l'invention conduit à une modélisation de niveaux de gris, gradients et orientations de gradients moyens et de leurs écarts types. A titre d'exemple, sur la figure 10 on voit une image acquise par la caméra de surveillance 2. On distingue des individus à l'intérieur et hors de la zone d'observation 4 en pointillée. Sur la figure 11, on a réalisé l'étape a1 de sorte que les éléments en mouvements hors fond fixe sont symbolisés par des blobs 12.

A l'étape a2, on réalise une détection de zone en comparant l'image et le fond, et en extrayant des zones de pixels, appelées « blobs », n'appartenant pas au fond.

A l'étape b1, on réalise une détection de l'ensemble des positions possibles de personnes. Cette étape peut être réalisée de deux façons :
- en effectuant une détection de tête par analyse de contours ; pour ce faire on reçoit en entrée les blobs précédemment détectés et ladite image acquise ;
- en recherchant des cohérences entre des positions de tête et de pied. Pour ce faire on reçoit en entrée les blobs précédemment détectés et ladite image acquise.

Le résultat de l'étape b1 est un ensemble d'hypothèses de position de têtes ou d'appariement tête/pied.

Puis, à l'étape b2, on réalise un dénombrement des individus. Plus précisément, on réalise une identification du nombre d'individus dans chaque blob et une estimation de leur position. En fait on élimine les fausses hypothèses de façon à identifier les positions réelles.

En ce qui concerne la méthode de détection de tête.

Sur la figure 12, on voit un peu plus en détail un algorithme de détection de têtes de l'étape b1. En entrée, on distingue l'image acquise, les blobs se détachant du fond, et un modèle de tête appelé « template ». La première étape consiste à appliquer un filtre de Canny pour extraire les contours des têtes d'individus sur l'image acquise de façon à obtenir une image de contours dans la zone des blobs.

Ensuite, on réalise une transformée en distance. Il s'agit d'un calcul d'une carte de distance entre contours. C'est un calcul rapide et stable de la corrélation du « template » de tête avec les contours. La sortie de cette étape est une carte de distances.

Ensuite, on réalise une convolution entre la carte de distances et le « template » de façon à obtenir une carte de convolution. La convolution comprend un calcul de la corrélation du « template » de tête avec les contours.

Enfin, on applique un algorithme de ligne de partage des eaux (« watershed » en langue anglaise) pour localiser et quantifier des maxima de corrélation, et déterminer des maxima de probabilité de présence de têtes dans l'image acquise. On obtient en sortie une hypothèse sur la position des têtes.

En ce qui concerne la méthode de cohérence pied-tête.

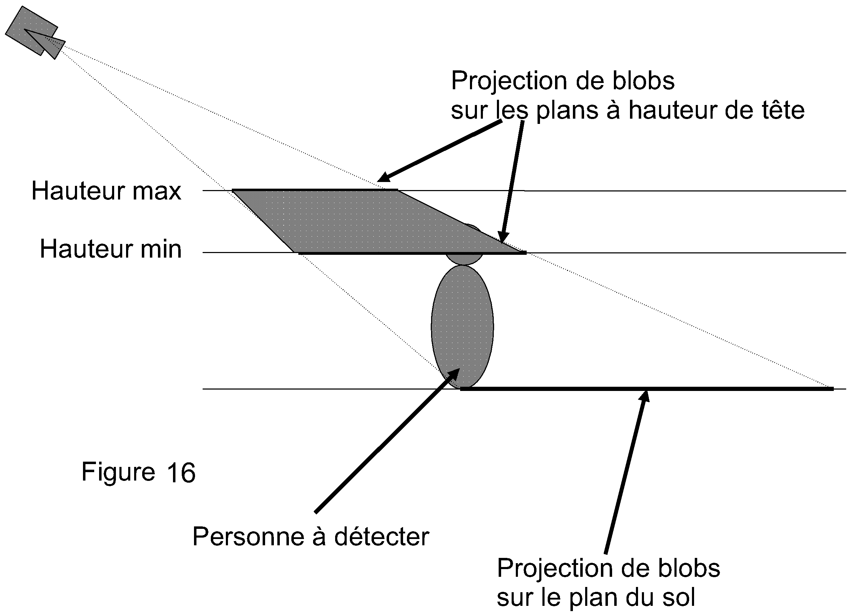

Sur la figure 16, on voit un peu plus en détail un algorithme de recherche de cohérence tête/pied de l'étape b1. En entrée, on considère les blobs se détachant du fond, et la calibration de la caméra permettant d'établir une correspondance entre les pixels de l'image et les points de l'espace leur correspondant.

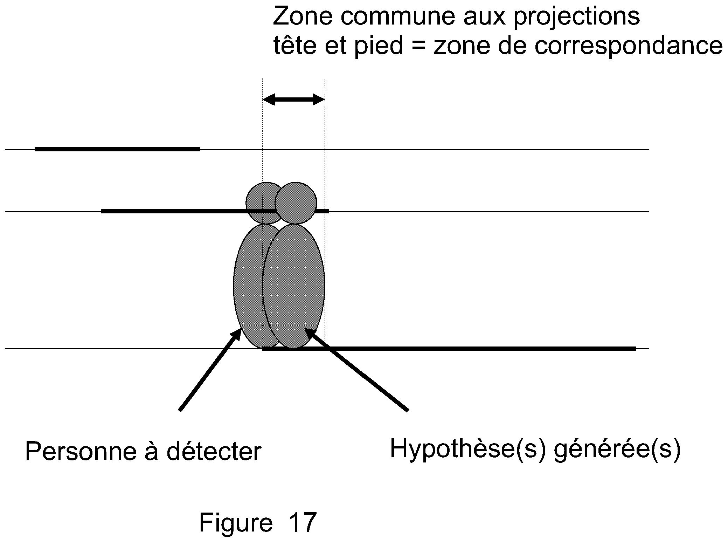

Il est considéré que les pixels d'un blob correspondent à un point visible d'une personne à détecter, et potentiellement à ses pieds ou à sa tête. La projection de ces pixels sur les plans du sol et des plans placés à hauteur standard de tête délimite donc des zones où seraient susceptibles de se trouver des personnes. La conjonction de ces projections, représentée dans la figure 17, permet de réduire ces zones à des espaces localisés, correspondant principalement aux positions réelles envisagées de personnes dans la scène.

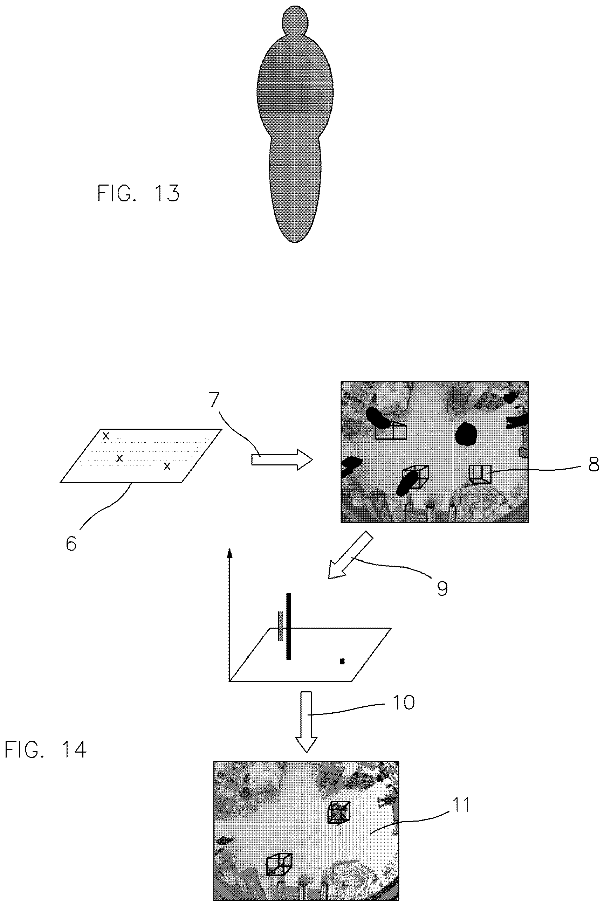

Sur la figure 13, on voit un exemple de modèle d'apparence d'un individu. Ce modèle est utilisé à l'étape b2. En particulier, la détection d'hypothèses de têtes ou de zones de cohérence pied-tête de l'étape b1 génère un grand nombre de fausses détections. Pour aboutir à l'interprétation complète de la scène, on cherche à identifier les individus à partir d'un modèle d'apparence à trois ellipses de la figure 13 (silhouettes pleines), en optimisant les critères suivants :
- minimiser le nombre de personnes,
- maximiser le nombre de pixels différents du fond et appartenant aux silhouettes,
- minimiser le nombre de pixels différents du fond et n'appartenant pas aux silhouettes,
- minimiser le nombre de pixels appartenant au fond et aux silhouettes, et/ou
- minimiser la distance des contours d'un modèle 2D/3D.

La convergence vers la solution optimale s'effectue par des méthodes itératives de type descente de gradient. L'évaluation de cette solution à partir de la superposition des modèles d'apparence permet de gérer naturellement les cas d'occlusion.

La détection selon l'invention a comme particularité de s'effectuer dans le repère tridimensionnel de la surface observée, les caméras étant calibrées avec précision dans cet environnement ; la calibration consiste à estimer avec précision la position et l'orientation de la caméra, ainsi que ses propriétés géométriques intrinsèques telles que focale, champ, distorsions...

Ainsi la position des personnes détectées peut être mise en correspondance avec le plan de la surface analysée, et seuls sont comptabilisés les endroits correspondant à leur position réelle (zone située au niveau de leurs pieds), et non l'ensemble des positions au sol correspondant aux pixels des blobs.

Les personnes détectées (dont les contours sont surlignés) génèrent alors une mesure uniquement à l'endroit correspondant à la position de leurs pieds. Cette mesure peut ainsi être visualisée dans un repère absolu du plan.

Sur la figure 14, on voit un autre exemple de procédé de détection d'individus. On fait l'hypothèse d'une taille standard de personne. La zone d'observation est considérée dans ses coordonnées réelles 3D, une "fenêtre de recherche" 6, en fait un parallélépipède 8 de la taille d'une personne, est déplacé dans cette zone suivant un maillage régulier. Pour chaque position de cette fenêtre de recherche, la projection 7 du parallélépipède dans l'image acquise est calculée, et la vraisemblance de présence d'une personne à cette position est évaluée en fonction du remplissage de ce parallélépipède par des pixels des blobs. Le remplissage est représenté sur le graphe 9.

Cette variante permet donc de gérer la perspective de la scène, ainsi que les défauts de la caméra tels que la distorsion, ce paramètre étant pris en compte dans le calcul de la projection des parallélépipèdes.

Cette variante permet également de prendre en compte le masquage par des objets : si l'on sait qu'une zone correspond à un objet derrière lequel des personnes seraient susceptibles d'être partiellement masquées, l'estimation de la probabilité de présence est corrigée en fonction du nombre de pixels de l'objet masquant situés dans la fenêtre de recherche.

Sur l'image 11 de la figure 14, après lissage, des maxima locaux de vraisemblance sont calculés en 11 par une méthode de ligne de partage des eaux sur la vraisemblance inversée; chaque bassin est considéré comme une détection possible.

Afin d'éviter des détections multiples d'un même individu (l'une des détections correspondant à son tronc, et est interprétée comme une personne plus éloignée), les détections obtenues à l'étape précédente sont classées et considérées par ordre croissant de distance les séparant de la caméra de surveillance. On valide les détections de la plus proche à la plus lointaine.

Pour qu'une détection soit validée, on prévoit à ce que le parallélépipède soit rempli par des pixels d'un blob au-delà d'un taux prédéterminé. Chaque détection validée efface du blob les pixels contenus dans son parallélépipède, afin d'éviter les détections multiples.

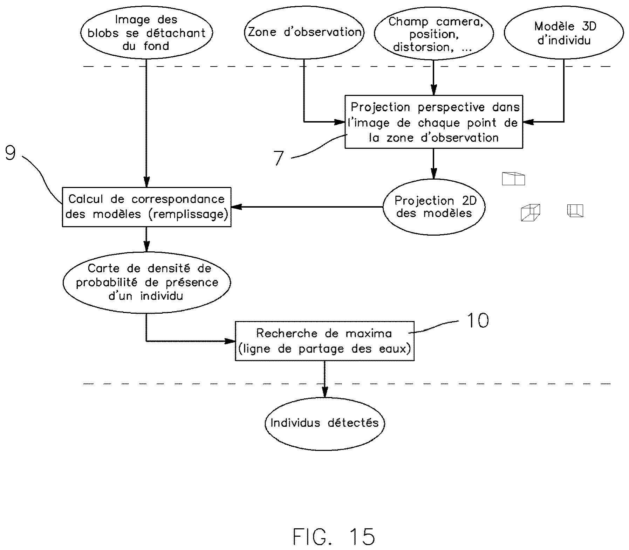

Sur la figure 15, on voit un exemple d'organigramme décrivant cette variante. En entrée, on prend en compte la zone d'observation 3D, les caractéristiques de la caméra de surveillance (champ, position, distorsion,...) et un modèle d'individu, de façon à réaliser la projection perspective 7 de chaque surface élémentaire de la zone d'observation. On obtient un modèle 2D des modèles 3D d'individu. Le calcul 9 de correspondance des modèles (le remplissage) entre une image des blobs et le modèle 2D des modèles permet d'établir une carte de densité de probabilité de présence de chaque individu. En 11, on recherche donc les maxima par ligne de partage des eaux (« watershed ») de façon à obtenir les individus détectés.

La présente invention concerne également une application logicielle ou programme d'ordinateur comprenant des instructions pour exécuter les étapes définies dans un procédé selon l'invention.

L'invention concerne également un moyen de stockage informatique tel qu'un CR-ROM, une clef USB, une mémoire flash... stockant un code de programme d'application qui, lors de son exécution par un processeur numérique, fournit des fonctionnalités telles que définies dans un quelconque procédé selon la présente invention, telle que définie par les revendications.

Bien sûr, l'invention n'est pas limitée aux exemples qui viennent d'être décrits et de nombreux aménagements peuvent être apportés à ces exemples sans sortir du cadre de l'invention, telle que définie par les revendications.

## Revendications

1. Procédé de suivi d'individus en déplacement dans une zone d'observation (4) traversée par des individus, dans lequel procédé on acquiert une pluralité d'images de la zone d'observation au moyen d'une caméra vidéo (2), pour chaque image acquise on réalise les étapes suivantes :
- extraction d'un fond fixe de l'image (a1),
- une étape a) de détection de zones de pixels « blobs » se détachant du fond fixe de l'image,
- une étape b) de détection des individus, dans laquelle :
b1) pour chaque blob, on génère plusieurs hypothèses de positions possibles au sein d'un modèle tridimensionnel de la zone d'observation en utilisant les caractéristiques de la caméra et une taille standard d'individu ;
et pour chaque position possible, on détecte une tête d'individu en appliquant un modèle tridimensionnel d'individu sur le blob correspondant,
b2) dénombrement des individus pour chaque blob,
c) pour chaque individu détecté, détermination de la position occupée par cet individu, et
d) pour l'ensemble des positions déterminées, on minimise la distance globale entre les positions ainsi déterminées dans l'image en cours et des positions déterminées lors d'une image précédente
procédé dans lequel l'étape b1) de détection d'une tête d'individu s'effectue par détermination de cohérences entre des positions de tête et de pied comprenant, pour laquelle :
- on établit une correspondance entre des pixels de l'image et des points de l'espace correspondant,
- on considère que les pixels d'un blob correspondent à un point visible d'un individu et potentiellement à ses pieds ou à sa tête, et
- on réalise une projection de ces pixels sur les plans du sol et des plans placés à hauteur standard de tête, la zone commune de projection des pieds et de la tête étant identifiée comme une position possible.

2. Procédé selon la revendication 1, dans lequel la minimisation de la distance globale consiste à réaliser les étapes suivantes : pour chaque position d'individu déterminée, on évalue la distance par rapport aux autres positions d'individus, définissant ainsi une matrice de distances que l'on convertit en matrice de similitudes, puis on normalise des vecteurs propres de cette matrice de similitudes.

3. Procédé selon la revendication 1 ou 2, dans lequel la distance entre deux positions est définie en prenant en compte une distance géométrique 3D.

4. Procédé selon l'une quelconque des revendications précédentes, dans lequel la distance entre deux positions est définie en prenant en compte une distance géométrique 2D.

5. Procédé selon l'une quelconque des revendications précédentes, dans lequel la distance entre deux positions est définie en prenant en compte une distance colorimétrique.

6. Procédé selon l'une quelconque des revendications précédentes, dans lequel la distance entre deux positions est définie en prenant en compte une cohérence temporelle.

7. Procédé utilisant plusieurs caméras dans différentes zones d'observation, dans lequel procédé pour chaque caméra on réalise les étapes selon l'une quelconque des revendications précédentes, dans lequel on réalise en outre les étapes suivantes :
- on détermine une trajectoire locale pour chaque individu et pour chaque zone d'observation, cette trajectoire locale correspondant aux positions successives occupées par cet individu,
- on enregistre ces trajectoires locales ainsi que les horaires d'apparition et de disparition,
- on effectue un appariement des différentes trajectoires locales à travers différents champs d'observation en déplaçant une fenêtre temporelle glissante sur l'ensemble des enregistrements, en cherchant à apparier la disparition d'une trajectoire locale avec l'apparition d'une autre.

8. Procédé selon l'une quelconque des revendications précédentes, dans lequel l'étape b1) de détection d'une tête d'individu s'effectue par analyse de contours.

9. Procédé selon la revendication 8, dans lequel l'étape de détection de têtes comprend les étapes suivantes :
- application d'un filtre de Canny sur l'image par rapport aux zones de pixels de façon à générer une image de contours des zones de pixels,
- application d'une transformée en distance de façon à élaborer une carte de distances,
- réalisation d'une convolution entre la carte de distance et un modèle de tête (template) de façon à obtenir une carte de convolution, et
- application d'un algorithme de ligne de partage des eaux (watershed) de façon à détecter des têtes d'individus.

10. Procédé selon l'une quelconque des revendications précédentes, dans lequel le dénombrement consiste à identifier simultanément le nombre d'individus présents et leur position respective.

11. Procédé selon la revendication 10, dans lequel l'identification des individus est effectuée à partir d'un modèle d'apparence à trois ellipses imitant un individu.

12. Procédé selon la revendication 11, dans lequel le modèle d'apparence est optimisé selon les critères suivants :
- minimisation du nombre d'individus,
- maximisation du nombre de pixels différents du fond et appartenant aux silhouettes,
- minimisation du nombre de pixels différents du fond et n'appartenant pas aux ellipses,
- minimisation du nombre de pixels appartenant au fond et aux ellipses, et
- minimisation de la distance des contours d'un modèle 2D/3D.

13. Procédé selon la revendication 12, dans lequel l'optimisation est réalisée au moyen d'un algorithme itératif de descente de gradient.

14. Procédé selon la revendication 13, dans lequel on répartit la convergence de l'algorithme itératif sur plusieurs images successives.

15. Procédé selon l'une quelconque des revendications précédentes, dans lequel les caractéristiques la caméra vidéo comprennent le champ de vision, le positionnement et la distorsion.

16. Procédé selon l'une quelconque des revendications précédentes, dans lequel l'extraction du fond fixe de l'image (a1) est obtenue en moyennant les valeurs des pixels de l'image au cours du temps.

17. Procédé selon la revendication 16, dans lequel on modélise la valeur de chaque pixel de fond par une distribution de probabilités.

18. Procédé selon la revendication 16 ou 17, dans lequel avant de moyenner les valeurs des pixels de l'image, on réalise une détection instantanée de mouvement par soustraction d'images successives et on applique un seuil afin d'obtenir un masque correspondant aux pixels qui ne seront pas moyennés.

## Patentansprüche

1. Verfahren zum Verfolgen von Individuen, die sich in einem von Individuen durchquerten Beobachtungsbereich (4) bewegen, bei welchem Verfahren eine Mehrzahl von Bildern des Beobachtungsbereichs mittels einer Videokamera (2) aufgenommen werden, wobei bei jedem aufgenommenen Bild die nachfolgenden Schritte durchgeführt werden:
- Extrahieren eines festen Hintergrunds aus dem Bild (a1);
- einen Schritt a) des Erfassens von "Flatschen"-Pixelbereichen, die sich vom festen Hintergrund des Bildes abheben,
- einen Schritt b) des Erfassens der Individuen, wobei
b1) für jeden Flatschen mehrere Hypothesen über mögliche Positionen innerhalb eines dreidimensionalen Modells des Beobachtungsbereichs unter Verwendung von Merkmalen der Kamera und einer Standardgröße des Individuums erstellt werden;
und für jede mögliche Position ein Kopf des Individuums unter Anwendung eines dreidimensionalen Individuummodells auf den entsprechenden Flatschen erfasst wird,
b2) Abzählen der Individuen für jeden Flatschen,
c) für jedes erfasste Individuum Ermitteln der von diesem Individuum eingenommenen Position, und
d) für sämtliche ermittelten Positionen Minimieren des Gesamtabstands zwischen den so ermittelten Positionen in dem laufenden Bild und der ermittelten Positionen bei einem vorherigen Bild,
bei welchem Verfahren der Schritt b1) des Erfassens des Kopfes des Individuums durch Ermitteln von Kohärenzen zwischen den Kopf- und Fußpositionen erfolgt, wobei:
- eine Verknüpfung zwischen Pixeln des Bildes und Punkten des entsprechenden Raums erstellt wird,
- in Betracht gezogen wird, dass die Pixel eines Flatschens einem sichtbaren Punkt eines Individuums und potentiell seinen Füßen oder seinem Kopf entsprechen, und
- eine Projektion dieser Pixel auf die Ebenen des Bodens und auf Ebenen erfolgt, die in Standardhöhe des Kopfes liegen, wobei der gemeinsame Projektionsbereich von Füßen und Kopf als eine mögliche Position identifiziert wird.

2. Verfahren nach Anspruch 1, wobei die Minimierung des Gesamtabstands darin besteht, die nachfolgenden Schritte durchzuführen: für jede ermittelte Position des erfassten Individuums Auswerten des Abstands von den weiteren Positionen von Individuen, wodurch eine Abstandsmatrix definiert wird, die in eine Ähnlichkeitsmatrix konvertiert wird, dann Normieren der Eigenvektoren dieser Ähnlichkeitsmatrix.

3. Verfahren nach Anspruch 1 oder 2, wobei der Abstand zwischen zwei Positionen unter Berücksichtigung eines geometrischen 3D-Abstands definiert wird.

4. Verfahren nach einem der vorangehenden Ansprüche, wobei der Abstand zwischen zwei Positionen unter Berücksichtigung eines geometrischen 2D-Abstands definiert wird.

5. Verfahren nach einem der vorangehenden Ansprüche, wobei der Abstand zwischen zwei Positionen unter Berücksichtigung eines kolorimetrischen Abstands definiert wird.

6. Verfahren nach einem der vorangehenden Ansprüche, wobei der Abstand zwischen zwei Positionen unter Berücksichtigung einer zeitlichen Kohärenz definiert wird.

7. Verfahren, bei dem mehrere Kameras in verschiedenen Beobachtungsbereichen verwendet werden, bei welchem Verfahren für jede Kamera die Schritte nach einem der vorangehenden Ansprüche erfolgen, wobei ferner nachstehende Schritte durchgeführt werden:
- Ermitteln einer lokalen Bewegungstrajektorie für jedes Individuum und für jeden Beobachtungsbereich, wobei diese lokale Bewegungstrajetkorie den aufeinanderfolgenden Positionen entspricht, die von diesem Individuum eingenommen werden,
- Aufzeichnen dieser lokalen Bewegungstrajektorie sowie von Zeitabläufen des Auftretens und Verschwindens,
- Abgleichen von verschiedenen lokalen Bewegungstrajektorien durch verschiedene Beobachtungsfelder durch Verlagerung eines gleitenden Zeitfensters über die gesamten Aufzeichnungen, indem versucht wird, das Verschwinden einer lokalen Bewegungstrajektorie mit dem Auftreten einer weiteren abzugleichen.

8. Verfahren nach einem der vorangehenden Ansprüche, wobei der Schritt b1) des Erfassens des Kopfes eines Individuums durch Analyse von Konturen erfolgt.

9. Verfahren nach Anspruch 8, wobei der Schritt des Erfassens von Köpfen die folgenden Schritte umfasst:
- Anwenden eines Canny-Filters auf das Bild bezüglich der Pixelbereiche, so dass ein Konturenbild der Pixelbereiche erzeugt wird,
- Anwenden einer Abstands-Transformierten, so dass eine Abstandskarte erhalten wird,
- Ausführen einer Faltung zwischen der Abstandskarte und einem Kopfmodell (Template), so dass eine Faltungskarte erhalten wird, und
- Anwenden eines Wasserscheiden-Algorithmus (watershed), so dass die Köpfe der Individuen erfasst werden.

10. Verfahren nach einem der vorangehenden Ansprüche, wobei das Abzählen darin besteht, gleichzeitig die Anzahl von vorhandenen Individuen und deren jeweilige Position zu identifizieren.

11. Verfahren nach Anspruch 10, wobei die Identifikation der Individuen ausgehend von einem Erscheinungsmodell mit drei Ellipsen erfolgt, das ein Individuum modelliert.

12. Verfahren nach Anspruch 11, wobei das Erscheinungsmodell nach den folgenden Kriterien optimiert wird:
- Minimierung der Anzahl an Individuen,
- Maximierung der Anzahl von Pixeln, die sich vom Hintergrund unterscheiden und Silhouetten zugehören,
- Minimierung der Anzahl von Pixeln, die sich vom Hintergrund unterscheiden und keinen Ellipsen zugehören,
- Minimierung der Anzahl von Pixeln, die dem Hintergrund und den Ellipsen zugehören, und
- Minimierung des Abstands der Konturen eines 2D/3D-Modells.

13. Verfahren nach Anspruch 12, wobei die Optimierung mittels eines iterativen Gradientenverfahrens erfolgt.

14. Verfahren nach Anspruch 13, wobei die Konvergenz des iterativen Algorithmus auf mehrere aufeinanderfolgende Bilder verteilt wird.

15. Verfahren nach einem der vorangehenden Ansprüche, wobei die Merkmale der Videokamera das Sichtfeld, die Positionierung und die Verzerrung umfassen.

16. Verfahren nach einem der vorangehenden Ansprüche, wobei die Extraktion des festen Hintergrunds aus dem Bild (a1) durch Mittelung der Werte der Pixel des Bildes im Laufe der Zeit erhalten wird.

17. Verfahren nach Anspruch 16, wobei der Wert eines jeden Pixels des Hintergrunds durch Wahrscheinlichkeitsverteilung modelliert wird.

18. Verfahren nach Anspruch 16 oder 17, wobei vor der Mittelung der Werte der Pixel des Bildes eine sofortige Erfassung der Bewegung durch Subtrahieren von aufeinanderfolgenden Bildern erfolgt und ein Schwellenwert angewendet wird, um eine Maske zu erhalten, die den Pixeln entspricht, die nicht gemittelt werden.

## Claims

1. Method for tracking moving individuals in an observation zone (4) through which individuals pass, thereby acquiring a plurality of images of the observation zone by means of a video camera (2), the following steps being carried out for each acquired image:
- extracting a fixed background from the image (a1),
- a step a) of detecting zones of pixels "blobs" standing out from the fixed background of the image,
- a step b) of detecting the individuals, in which:
b1) for each blob, several hypotheses for possible positions are generated within a three-dimensional model of the observation zone by using the features of the camera and a standard size of the individual;
and for each possible position, a head of an individual is detected by applying a three-dimensional model of an individual onto the corresponding blob,
b2) counting the individuals for each blob,
c) for each detected individual, determining the position occupied by this individual, and
d) for the set of determined positions, minimizing the overall distance between the positions thus determined in the current image and positions determined during a preceding image
method in which the step b1) of detecting a head of an individual is carried out by determining coherences between head and foot positions, in which:
- a correspondence is established between pixels of the image and corresponding points of space,
- it is assumed that the pixels of a blob correspond to a visible point of an individual and potentially to his feet or of his head, and
- these pixels are projected onto the ground planes and planes placed at standard head height, the common projection zone of the feet and of the head being identified as a possible position.

2. Method according to claim 1, in which minimizing the overall distance consists of carrying out the following steps: for each determined position of an individual, the distance is evaluated with respect to the other positions of individuals, thus defining a matrix of distances that is converted into a matrix of similarities, then characteristic vectors of this matrix of similarities are normalized.

3. Method according to claim 1 or 2, in which the distance between two positions is defined taking into account a 3D geometric distance.

4. Method according to any one of the preceding claims, in which the distance between two positions is defined taking into account a 2D geometric distance.

5. Method according to any one of the preceding claims, in which the distance between two positions is defined taking into account a colorimetric distance.

6. Method according to any one of the preceding claims, in which the distance between two positions is defined taking into account a temporal coherence.

7. Method using several cameras in different observation zones, thereby carrying out for each camera the steps according to any one of the preceding claims, in which the following steps are also carried out:
- determining a local trajectory for each individual and for each observation zone, this local trajectory corresponding to the successive positions occupied by this individual,
- recording these local trajectories as well as the times of appearance and disappearance,
- matching different local trajectories across different fields of view by moving a sliding temporal window over the set of recordings, seeking to match the disappearance of a local trajectory with the appearance of another.

8. Method according to any one of the preceding claims, in which the step b1) of detecting a head of an individual is carried out by contour analysis.

9. Method according to claim 8, in which the step of detection of heads comprises the following steps:
- applying a Canny filter to the image with respect to the zones of pixels so as to generate an image of contours of the zones of pixels,
- applying a distance transform so as to prepare a chart of distances,
- performing a convolution between the distance chart and a model of a head (template) so as to obtain a convolution chart, and
- applying a watershed algorithm so as to detect heads of individuals.

10. Method according to any one of the preceding claims, in which the counting consists of simultaneously identifying the number of individuals present and their respective position.

11. Method according to claim 10, in which the identification of the individuals is carried out on the basis of an appearance model having three ellipses imitating an individual.

12. Method according to claim 11, in which the appearance model is optimized according to the following criteria:
- minimizing the number of individuals,
- maximizing the number of pixels different from the background and belonging to the silhouettes,
- minimizing the number of pixels different from the background and not belonging to the ellipses,
- minimizing the number of pixels belonging to the background and to the ellipses, and
- minimizing the distance of the contours of a 2D/3D model.

13. Method according to claim 12, in which optimization is carried out by means of an iterative gradient descent algorithm.

14. Method according to claim 13, in which the convergence of the iterative algorithm is distributed over several successive images.

15. Method according to any one of the preceding claims, in which the characteristics of the video camera comprise the field of view, the positioning and the distortion.

16. Method according to any one of the preceding claims, in which the extraction of the fixed background of the image (a1) is obtained by averaging the values of the pixels of the image over time.

17. Method according to claim 16, in which the value of each background pixel is modelled by a probability distribution.

18. Method according to claim 16 or 17, in which before averaging the values of the pixels of the image, an instantaneous detection of movement is carried out by subtracting successive images and a threshold is applied in order to obtain a mask corresponding to the pixels which will not be averaged.
